# DEMANDE DE BREVET EUROPEEN

(11) **EP 1 930 615 A1**
(43) Date de publication de la demande: **11.06.2008**
(21) Numéro de dépôt: 07121592.5
(22) Date de dépôt: 27.11.2007
(51) Int. Cl.: F16D 51/14, F16D 65/09

(54) **Frein à tambour et ensemble plateau-âme-patin associé à un tel frein**

(30) Priorité: 06.12.2006 FR 0610652
(71) Demandeur: ROBERT BOSCH GMBH, 70442 Stuttgart (DE)
(72) Inventeur: Dupuis, Vincent, 94100 Saint Maur (FR); Layer, Philippe, 94520 Perigny sur Yerres (FR)
(74) Mandataire: Hurwic, Aleksander Wiktor

(57) **Abrégé**

Frein à tambour comportant un tambour de roue coiffant un plateau (1) sur lequel est monté au moins un patin (2,3) avec une garniture de friction (2a,3a), une âme (9,10) appliquant le patin et sa garniture de friction contre un bord intérieur du tambour en réponse à une commande de freinage. Le patin coulisse sur le plateau suivant une direction essentiellement radiale de ce plateau. Le plateau comporte un relief, transversal au plan du plateau, relief dont des parois transversales au plan du plateau et orientées vers le centre du plateau guident le patin lors d'un déplacement radial vers le bord du plateau. Ces mêmes parois latérales solidaires du plateau retiennent par traction le patin le long de sa paroi intérieure lorsqu'il subit une contrainte tangentielle à la circonférence du plateau. Le relief comporte à son sommet une partie plane parallèle au plan du plateau sur laquelle s'appuie et coulisse l'âme.

## Description

Frein à tambour et ensemble plateau-âme-patin associé à un tel frein.

L'invention a pour objet un frein à tambour du genre de ceux qui comportent un plateau sur lequel est monté au moins un patin muni d'une garniture de friction et d'une âme qui permet d'appliquer l'ensemble patin-garniture contre un tambour de roue en réponse à une commande de freinage

Les freins à tambour présentent plusieurs avantages notamment une simplicité d'installation de la fonction frein à main. Aussi, les freins à tambour sont toujours fréquemment utilisés notamment sur les roues arrières des véhicules.

Dans l'état de la technique, le frein à tambour comporte, de préférence, deux patins opposés suivant une direction diamétrale du tambour. Le tambour coiffe le plateau. A ce titre, le plus souvent, le plateau lui-même est de forme circulaire. Les deux patins sont montés coulissant suivant une direction essentiellement radiale entre deux parois de guidage. Une âme pour chaque patin permet d'appliquer le patin contre le tambour de roue en réponse à une commande de freinage. L'âme se présente sous la forme d'une pièce plate avec un coté rectiligne et un autre arrondi de forme parabolique tel une bosse. C'est le bord de ce dernier coté qui prend appui sur le patin. La surface plane de cette âme est dans un plan parallèle à celui du plateau.

La commande de freinage est généralement transmise par un cylindre hydraulique de roue. L'âme, solidaire de l'ensemble patin-garniture grâce à une fixation, comporte des moyens élastiques pour être écartée du tambour lorsque le freinage cesse.

Chaque patin se présente comme une lame épaisse posée à chant sur le plateau, la lame étant arquée de sorte à épouser une section de la circonférence intérieure du plateau. L'étendue angulaire de chaque patin est, de préférence, inférieure à 50°. La garniture de friction est, en général, surmoulée et collée sur le patin.

De plus, deux extrémités de la lame du patin sont recourbées vers le centre du plateau. Ces extrémités servent alors de butées propres à s'appuyer dans le sens circonférentiel contre une paroi de guidage correspondante du plateau. Les parois de guidage sont formées par un relief du plateau. Chaque relief, transversal au plan du plateau, possède une paroi sur laquelle vient buter le bord extérieur d'une extrémité recourbée du patin.

L'ensemble patin-garniture épouse, coté périphérie du plateau, une forme parallèle à la circonférence du plateau. L'âme peut comporter un levier plat, avec un profil en arc de courbe convexe vers l'extérieur. Ce levier possède une extrémité articulée sur un point fixe, tel un plot, du plateau. L'autre extrémité du levier est soumise à un effort de poussée, généralement exercé par un piston du cylindre hydraulique. Cet effort de poussée s'opère dans un sens propre à appliquer le patin contre le tambour. L'âme vient alors en appui par son bord extérieur contre la face interne du patin correspondant.

L'âme peut comporter sur son bord extérieur une partie en saillie formant une bosse qui assure l'appui contre la face interne du patin correspondant. De préférence, l'appui du levier contre la face interne du patin est situé environ à mi-distance des extrémités de l'âme. Le rapport de levier de l'âme est ainsi avantageusement compris entre 2 et 3.

Lors d'une action de freinage, quatre efforts sont remarquables dans un frein à tambour. Premièrement, on constate un effort d'entrée au niveau du contact entre le piston du cylindre hydraulique et la première extrémité de l'âme. Deuxièmement un effort d'application est présent au contact du patin et de sa garniture de friction avec le tambour. Troisièmement un effort de freinage s'exerce, en poussée, au point de contact du patin avec une butée du plateau correspondante à la paroi de guidage. Quatrièmement un effort de réaction s'exerce au point de contact de la seconde extrémité de l'âme avec le plot.

Dans ce type évolué de frein à tambour, le lieu de l'effort de freinage est dissocié de l'effort de réaction. Ainsi l'âme subit l'effort de réaction sur le plot alors que le patin subit l'effort de freinage sur la butée du plateau. Dans une telle configuration le patin subit un effort de freinage en compression sur sa butée.

Le frein peut être prévu pour que l'axe de l'effort de réaction soit décalé par rapport à l'axe de l'effort d'application. Il suffit, par exemple, pour cela que l'âme applique le patin et sa garniture associée sur un point légèrement plus haut ou plus bas que l'axe de symétrie de l'ensemble patin et garniture.

Le problème rencontré dans la fabrication d'un tel frein à tambour réside toutefois dans le moulage ou l'emboutissage du plateau. Celui-ci nécessite une surface plane. Cette surface plane correspond à une base de fixation du plateau sur la fusée de roue. Cette surface comporte des reliefs: les parties correspondant aux butées d'arrêt des patins en compression, les plots de pivot et d'appuis des âmes sur le plateau, ainsi qu'accessoirement un support d'un câble de traction d'un frein à main. On entend ici par frein à main une commande du frein de garage exercée par une main ou, pour certains véhicules, au pied.

Ces exigences de fabrication compliquent les moules d'emboutissage et augmentent la quantité de matière première nécessaire à la réalisation de la pièce. De plus, bien que l'âme vienne, lors d'une action de freinage, en appui sur le patin, la surface concernée, sensiblement positionnée au centre du patin, ne représente qu'une faible partie du bord extérieur de l'âme face à la paroi intérieure du patin. Cette constatation découle naturellement d'une forme de bosse plus ou moins prononcée ou du patin ou, de préférence, de l'âme.

Selon l'invention, ce problème est résolu grâce à une des deux parois intérieures sensiblement radiales du U du patin qui prend appui sur le relief transversal du plateau. Cet appui génère, non plus une compression du patin sur la butée correspondante de la paroi de guidage, mais une traction du patin, permettant de le retenir, en contre réaction de la force de freinage. Ce relief est obtenu à partir d'un seul emboutissage du plateau au lieu de deux précédemment, la production est ainsi simplifiée. Ainsi, à partir du relief du plateau supportant l'âme et sans ajout de butées supplémentaires sur le plateau ou d'oreilles et de pattes sur respectivement le patin et l'âme, le mécanisme du frein est respecté tout en simplifiant la fabrication des pièces en mouvement du plateau.

Pour les freins à tambours actuels, un moyen de fixation tel, par exemple, un ressort de maintien solidaire du plateau et pinçant le profil de l'âme empêche l'âme de se déplacer transversalement au plan du plateau. Pour autant ce ressort permet à l'âme de conserver la possibilité d'agir comme un levier dans le plan du plateau. De plus, un second moyen de fixation tel, pour exemple, une pince, un clip pinçant les extrémités du patin rend solidaire, l'ensemble patin-garniture de l'âme. Cette pince passe le long de la surface supérieure de l'âme et est recourbée le long du bord intérieur de l'âme. Ainsi lors d'une action de freinage et de déplacement latéral de l'âme en direction de la périphérie du plateau ou de fin de freinage avec un rappel de l'âme à sa position initiale, le patin correspondant suit la même course. De plus pour empêcher un déplacement transversal du patin par rapport au plan du plateau et conserver sa course bien au contact de la paroi du plateau, deux pattes de fixation sont moulés sur l'âme et viennent s'agripper, par le dessus, sur les deux extrémités du patins ainsi que sur la pince de fixation.

Aussi, en sus du problème de la complexité de l'emboutissage du plateau, la réalisation de l'âme avec sa bosse au niveau de l'appui contre le patin et de ses pattes de fixation en excroissance apporte une complication supplémentaire. Ce problème de fabrication se retrouve pour le patin car bien que les extrémités soient recourbées vers l'intérieur du plateau pour permettre, sur leur bord extérieur, de prendre appui sur les butées du plateau, en compression, lors de l'effort de freinage, il est de plus nécessaire de créer, à partir de ces mêmes extrémités, des oreilles. Ces oreilles sont réalisées sous la forme d'une extension moulée sur une extrémité recourbée et sous la forme d'une patte plane dans le plan du plateau et prenant appui sur le dessus de la butée correspondante. C'est sur la surface supérieure de ces oreilles que viennent s'appliquer et se fixer, à la fois chaque clip et chaque patte de l'âme.

Dans le cadre d'une production industrielle de ces pièces, la fabrication de ces oreilles et de ces pattes pose d'autant plus de problèmes que le dessin des pièces à réaliser est complexe et morcelé.

Dans l'invention on résout également ces problèmes de fabrication grâce à des dessins de l'âme et du patin simplifiés. A ces fins l'âme, en forme de croissant de lune, posée sur un relief du plateau, repose sur une partie assise du patin. Le patin a pour forme une banquette en arc de cercle, avec, pour assise, une partie avec une surface posée d'un coté sur le plateau et de l'autre une surface supportant le dessous de l'âme, et avec, pour dossier, transversal au plan du plateau, une partie intérieure concave le long de laquelle vient s'appuyer le bord extérieur en croissant de lune de l'âme, et, une partie extérieure habillée d'une garniture de friction qui vient en appui sur le bord intérieur du tambour. Le bord extérieur en croissant de lune de l'âme tangente la totalité de la partie du patin correspondante au dossier. L'assise contre le plateau, telle un U, comporte deux décrochés latéraux de sorte que l'intérieur, concave, de ce U vienne s'imbriquer dans un motif transversal, en relief, du plan moyen du plateau.

C'est sur cette même partie en relief du plateau que repose et glisse l'âme lors d'une action de freinage. Ce relief permet également lors d'une action de freinage de retenir le patin contre la force de freinage tangentielle à la circonférence du plateau, dans un sens ou dans l'autre.

L'invention a donc pour objet un frein à tambour comportant un tambour de roue coiffant un plateau sur lequel est monté au moins un patin muni sur un bord extérieur d'une garniture de friction, une âme appliquant le patin et sa garniture de friction contre le tambour en réponse à une commande de freinage, et des moyens élastiques de rappel de l'âme, solidaire du patin, pour l'écarter du tambour lorsque le freinage cesse, le patin coulissant sur le plateau suivant une direction essentiellement radiale caractérisé en ce que le plateau comporte un relief afin de retenir, par traction, le patin lorsqu'il subit une contrainte tangentielle à la circonférence du plateau.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une vue simplifiée en élévation, avec parties en extérieur et partie en coupe, d'un frein à tambour de l'état de la technique;
- Figure 2 : une vue simplifiée en élévation, avec parties en extérieur et partie en coupe, du frein à tambour de l'invention;
- Figure 3 : vue de dessus, en transparence, de la partie relief du plateau, âme et patin;
- Figure 4 : schéma du patin;
- Figure 5 : vue du dessus du patin et du relief du plateau.

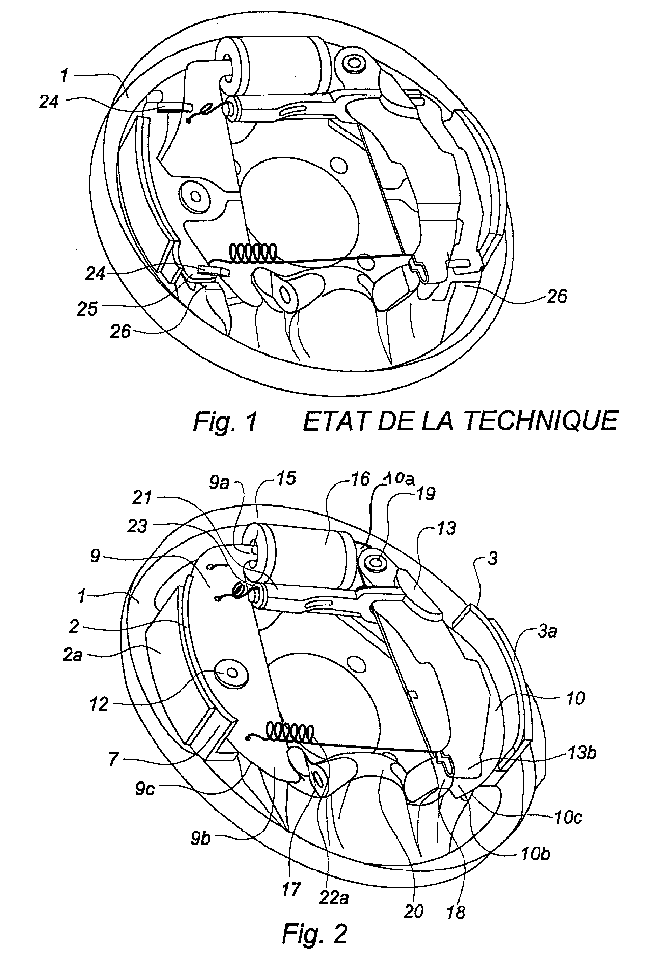

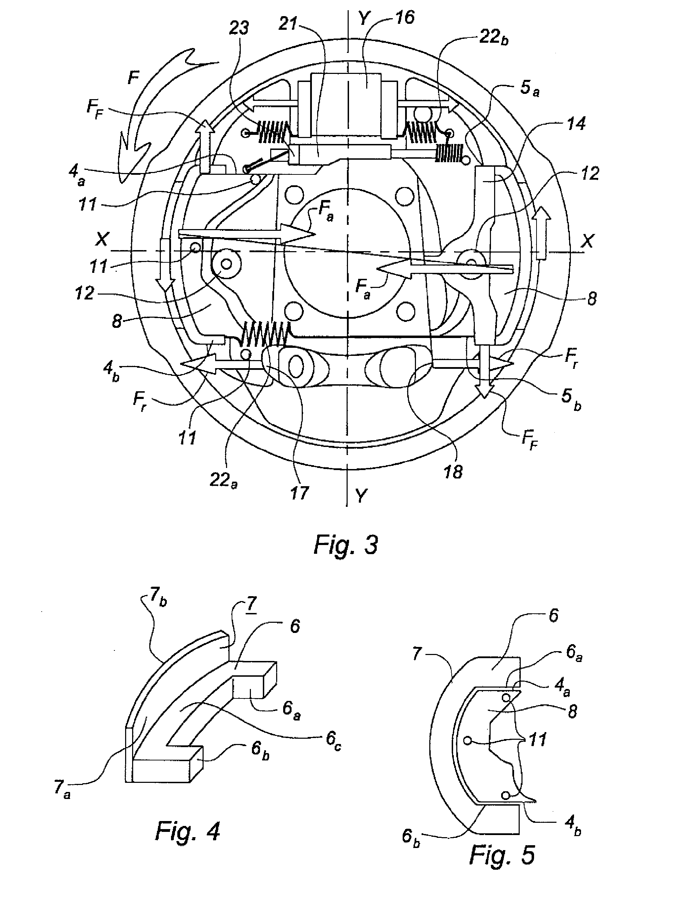

En se reportant aux figures 2 et 3, on peut voir un frein à tambour comportant un plateau 1, prévu pour être fixé au niveau de la fusée d'un bras de roue d'un véhicule. Deux patins 2 et 3 opposés suivant une direction diamétrale sont montés coulissants suivant cette direction en enserrant deux parois de guidage constituées par des faces respectivement 4a,4b et 5a,5b de reliefs 8 transversaux au plan moyen du plateau et solidaires du plateau.

Chaque patin 2 et 3 est muni d'une garniture de friction 2a et 3a fixée par collage, de préférence par surmoulage et sans rivetage ou sertissage. Chaque patin formé par une plaque métallique peut épouser différentes formes, de préférence une forme en arc de cercle avec pour surface extérieure, une portion de surface cylindrique convexe vers l'extérieur dans le sens radial, portion sur laquelle est fixée la garniture de friction 2a et 3a. Chaque patin 2 et 3 comporte une partie horizontale 6 coulissant dans le plan du plateau et une partie verticale 7 transversale au plan du plateau. La partie horizontale 6 comporte deux extrémités recourbées vers l'intérieur du plateau selon une direction sensiblement parallèle à l'axe de symétrie horizontal du patin. A l'intérieur de la partie concave en forme de U formé par les deux extrémités, deux surfaces intérieures 6a et 6b, faces à faces enserrent le relief 8 du plateau 1 de tel sorte que les surfaces 6a et 6b de chaque patin coulissent, parallèlement à une direction diamétrale X-X, le long et contre les surfaces respectives 4a et 4b des parois de chaque relief 8 du plateau. Chaque patin comporte également une surface 6c sur laquelle coulisse une âme 9 ou respectivement 10, l'âme reposant et coulissant sur le dessus du relief 8 du plateau. Pour exemple, trois picots 11 moulés ou emboutis à la surface du relief 8 servent de support afin que le glissement de chaque âme sur leurs reliefs 8 soit isostatique. Un moyen d'application tel, par exemple, une pince 14 permet de solidariser chaque patin à son âme respective. Cette pince vient se fixer en tension sur le dessus de la surface 6c du patin en pinçant les deux bords extérieurs des deux extrémités recourbées. Une partie centrale de cette pince 14 converge, en longeant la surface inférieure de l'âme 10, vers le centre du plateau et se recourbe le long du bord intérieur de l'âme 10. Un moyen de maintien comme un ressort 12 passant par un trou serré commun à chaque âme 9 et 10 et à leurs pinces 14 respectives, est fixé à une extrémité du plateau. Ce ressort 12 permet d'empêcher un déplacement suivant une direction perpendiculaire au plan du plateau, de l'ensemble âme-patin-garniture tout en permettant un certain débattement longitudinal. D'autres moyens de maintien équivalents peuvent être retenus. La mise en place des patins 2 et 3, des pinces 14 et des âmes 9 et 10 est telle qu'elle permet aisément leurs démontages perpendiculairement au plan moyen du plateau puis leurs réinstallations.

Chaque âme 9 et 10 comporte deux extrémités, l'une 9a et 10a est reliée à un piston 15 d'un cylindre de roue 16 monté sur le plateau 1, l'autre extrémité 9b et 10b prend appui autour d'un point fixe17 et 18 en relief du plateau. Le piston 15 peut symétriquement exercer un effort de poussée sur chaque extrémité 9a et 10a sensiblement parallèle à l'axe diamétral X-X.

Chaque âme 9 et 10 possède une forme sensiblement proche d'un croissant de lune dont le bord extérieur en arc de cercle 9c et 10c vient en appui, tout le long d'un bord intérieur respectif 7a de la partie transversale également en arc de cercle de chaque patin 2 et 3. Un levier 13 de commande de frein à main est articulé sur un axe 19 en jonction avec l'extrémité 10a de l'âme 10. Sa seconde extrémité 13b dispose d'un repli permettant l'accrochage d'un câble de traction (non représenté) qui passe dans un guide 20 fixé sur le plateau 1.

Une entretoise 21 est prévue entre l'âme 9 et l'ensemble composé de l'âme 10 et du levier 13 afin de limiter la course de rappel des extrémités 9a et 10a l'une vers l'autre sous l'action d'un premier moyen élastique de rappel sous la forme ici d'un ressort 22b accroché et tendu entre ces mêmes extrémités. Un deuxième moyen élastique de rappel tel, par exemple, un ressort 22a est prévu entre chaque extrémité 9b et 10b des âmes 9 et 10 lors de leurs articulations en appui sur les butées 17 et 18. L'entretoise 21 prévue entre l'âme 9 et l'âme 10 et/ou le levier 13 comporte, de préférence, un dispositif 23 de rattrapage automatique d'usure des garnitures de friction modifiant la longueur de l'entretoise 21 afin de compenser l'usure des garnitures 2a et 3a. Les zones respectives d'appuis des bord extérieurs 9c et 10c des âmes 9 et 10 contre les bords intérieurs des patins 2 et 3 résulte d'une force d'application du piston 15 sur les âmes 9 et 10 avec un effet de levier avantageux générant un coefficient de démultiplication de l'ordre de deux à trois grâce aux points d'appuis 17 et 18 en butées. Selon les cas, un décalage approprié entre cette force d'application démultipliée et l'effort de réaction, en retour, de la paroi interne du tambour de frein contre la garniture de friction peut procurer une meilleure stabilité et une meilleure usure des garnitures et donc de meilleures performances du frein. Ce décalage s'obtient notamment, par exemple, en appliquant la résultante de l'effort de l'âme au dessous voire au dessus de l'axe de symétrie horizontal de l'ensemble patin et garniture.

Le fonctionnement du frein à tambour des figures 2 et 3 est le suivant. On suppose que le tambour tourne dans le sens de la flèche F de la figure 3. Lorsqu'un freinage est commandé, du liquide sous pression est envoyé dans le cylindre 16 entre les pistons 15 qui s'écartent l'un de l'autre en poussant les extrémités 9a et 10a des âmes 9 et 10. Ces âmes 9 et 10 agissent alors comme des leviers en pivotant le long des butées 17 et 18 et en exerçant une poussée sensiblement radiale des bords extérieurs 9c et 10c des âmes 9 et 10 contre les bords intérieurs respectifs 7a des patins 2 et 3 associés. Les patins 2 et 3 coulissent alors respectivement le long des parois de guidage 4a,4b et 5a,5b des reliefs 8 du plateau 1 et viennent s'appliquer contre la surface interne périphérique du tambour en exerçant le freinage désiré.

Une force de frottement, en réaction à la force de freinage et agissant sur la garniture et son patin solidaire oblige les extrémités des patins en amont du sens de rotation et plus particulièrement leurs surfaces respectives 6a, à s'appuyer contre les parois 4a et 5b de leurs reliefs 8 respectifs. Ainsi une force de freinage Ff (Fig.3) vient s'appliquer sur ces surfaces 4a et 5b par l'intermédiaire des patins qui se trouvent, dès lors, en traction et non plus en compression comme dans les systèmes de freins connus. De plus, un effort de réaction Fr (Fig.3) s'applique selon la flèche Fr, au niveau des extrémités 9b et 10b, sur les butées 17 et 18. Ainsi on conserve toujours deux points distincts d'application pour la force de freinage Ff d'un coté et pour la force de réaction Fr de l'autre, favorable à la stabilité du couple de freinage. De plus, dans le cadre de l'invention la réaction à la force de freinage sur les faces 4a et 5b se produisent en amont donc en début de couple de freinage à la différence des systèmes de freins connus où la force de freinage s'applique sur les patins en compression et plutôt en fin de couple sur leurs butées respectives. Dans le cas d'un sens de rotation opposé du tambour, ce sont les parois 5a et 4b situées de part et d'autre des reliefs 8 qui interviennent en tant que butées de traction.

La fabrication du plateau est simplifié par rapport à la figure 1 d'un frein existant. En effet l'emboutissage de la feuille de métal constituant le plateau nécessite seulement un relief à la fois pour le support coulissant de chaque âme et à la fois pour les parois de guidages et d'accroche de chaque patin. L'autre relief nécessaire correspond aux points d'appuis et de butés 17 et 18 et au support de passage d'un câble de traction correspondant à un levier 13 de frein à main. Dans le cadre d'un moule, la quantité de matière nécessaire à la fabrication du plateau est aussi réduite. La fabrication de chacune des âmes 9 et 10 est aussi simplifiée car elle ne nécessite pas une forme de bosse très marquée et le moulage ou la découpe de deux pattes de fixation 24 (Figure 1). De la même façon chaque patin trouve dans l'invention une forme simplifiée, épurée ne nécessitant pas la création d'oreilles latérales 25 comme moyen d'assise sur les butées 26.

Quant au frein à main, il peut être actionné en exerçant une traction sur l'extrémité inférieure 13b du levier 13, de la droite vers la gauche de la figure 2, par un câble non représenté. Le levier 13 tourne dans le sens des aiguilles d'une montre autour de l'axe 19 et, par l'entretoise 21, pousse l'âme 9 qui applique le patin 2 contre le tambour. Puis le levier 13 pivote contre l'entretoise 21 par réaction, et repousse le piston 15, son axe 19 et l'âme 10 vers la droite en appliquant le patin 3 également contre le tambour.

Il est utile de préciser que le cas échéant, les points d'articulations et de butés 17 et 18 pourraient être supprimés grâce à la mise en place d'un second cylindre de roue semblable au cylindre 16 mais entre les deux extrémités 9b et 10b des âmes 9 et 10.

## Revendications

1. Frein à tambour comportant un tambour de roue coiffant un plateau (1) sur lequel est monté au moins un patin (2,3) muni sur un bord extérieur d'une garniture de friction (2a,3a), une âme (9,10) appliquant le patin et sa garniture de friction contre le tambour en réponse à une commande de freinage, et des moyens élastiques de rappel de l'âme (22a,22b), solidaire du patin, pour écarter l'âme du tambour lorsque le freinage cesse, le patin coulissant sur le plateau suivant une direction essentiellement radiale **caractérisé en ce que** le plateau comporte un relief (8) afin de retenir, par traction, ce patin lorsque ce patin subit une contrainte tangentielle à la circonférence du plateau et que ledit relief (8) comporte à son sommet une partie plane parallèle au plan du plateau sur laquelle s'appuie et coulisse l'âme.

2. Frein à tambour selon la revendication 1, **caractérisé en ce que** le relief (8) est transversal au plan du plateau et possède des parois latérales (4a,4b,5a,5b).

3. Frein à tambour selon l'une quelconque des revendications 1 à 2 **caractérisé en ce que** le patin est guidé lors d'un déplacement radial vers le bord du plateau par les parois latérales du relief.

4. Frein à tambour selon l'une quelconque des revendications 1 à 3 **caractérisé en ce que** le patin est retenu par traction le long d'une des parois latérales du relief lorsqu'il subit une contrainte tangentielle à la circonférence du plateau.

5. Frein à tambour selon l'une quelconque des revendications 1 à 4 **caractérisé en ce que** deux parois latérales, situées de part et d'autre du relief, retiennent un patin pour deux sens de rotation opposé du tambour.

6. Frein à tambour selon l'une quelconque des revendications 1 à 5 **caractérisé en ce que** un bord extérieur (9c,10c) de l'âme est au contact tout le long d'une paroi intérieure (7a) du patin.

7. Frein à tambour selon l'une quelconque des revendications 1 à 6 **caractérisé en ce que** le bord extérieur de l'âme, le bord intérieur du patin et le bord extérieur du patin épousent une forme sensiblement parallèle à la circonférence du plateau.

8. Frein à tambour selon l'une quelconque des revendications 1 à 7 **caractérisé en ce qu'**une partie d'une surface supérieure plane (6c) du patin comporte un bossage pour faire reposer une partie d'une surface orientée coté plateau de l'âme.

9. Frein à tambour selon l'une quelconque des revendications 1 à 8 **caractérisé en ce qu'**il comporte deux patins.
